(19) **Europäisches Patentamt / European Patent Office / Office européen des brevets**

(11) **EP 4 654 730 A1**

(12) # EUROPEAN PATENT APPLICATION
published in accordance with Art. 153(4) EPC

(43) Date of publication:
**26.11.2025 Bulletin 2025/48**

(21) Application number: **24744910.1**

(22) Date of filing: **18.01.2024**

(51) International Patent Classification (IPC):
**H04W 74/08** (2024.01)  **H04W 74/00** (2009.01)
**H04W 72/231** (2023.01)  **H04W 72/232** (2023.01)
**H04W 56/00** (2009.01)

(52) Cooperative Patent Classification (CPC):
**H04W 56/00; H04W 72/231; H04W 72/232;
H04W 74/00; H04W 74/08**

(86) International application number:
**PCT/KR2024/000914**

(87) International publication number:
**WO 2024/155131 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2023  KR 20230007579**

(71) Applicant: **LG Electronics Inc.
Yeongdeungpo-gu
Seoul 07336 (KR)**

(72) Inventors:
• **GO, Seongwon**
  **Seoul 06772 (KR)**
• **YANG, Suckchel**
  **Seoul 06772 (KR)**
• **KANG, Jiwon**
  **Seoul 06772 (KR)**
• **PARK, Haewook**
  **Seoul 06772 (KR)**

(74) Representative: **Plasseraud IP
104 Rue de Richelieu
CS92104
75080 Paris Cedex 02 (FR)**

(54) **METHOD AND DEVICE FOR RANDOM-ACCESS PROCEDURE IN WIRELESS COMMUNICATION SYSTEM**

(57)    A method according to an embodiment of the present disclosure comprises the steps of: receiving configuration information; transmitting a PRACH; and receiving an RAR on the basis of a window related to the RAR. The configuration information includes i) a first RACH configuration related to a PCI of a serving cell and ii) a second RACH configuration related to an additional PCI. The RAR is related to one of two TAGs. The PCI is related to a first TAG, and the additional PCI is related to a second TAG. On the basis that the PRACH is related to the additional PCI, a length of the window is determined on the basis of a response window parameter related to the second RACH configuration.

【FIG. 3】

```
            ( Start )
                |
    Receive configuration information  ── S310
                |
         Transmit PRACH  ── S320
                |
          Receive RAR  ── S330
                |
             ( End )
```

**Description**

[TECHNICAL FIELD]

The present disclosure relates to a method and a device for a random-access procedure in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CC/BWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. In order to support a TRP-specific TA (i.e., in order to support two TAs for two TRPs), two TAGs can be configured within one serving cell.

It has been agreed to support an operation (cross-TRP RACH triggering) in which a specific TRP triggers RACH transmission to the UE to another TRP in an M-DCI based M-TRP environment. In this case, in case of a non-ideal backhaul situation between TRPs, a delay equal to a backhaul delay may occur until a Random Access Response (RAR) related to a specific TRP (e.g., a non-serving cell or additional Physical Cell Identity (PCI)) is forwarded to another TRP (e.g., a serving cell).

As an example, in case of an inter-cell M-DCI based TRP, a Random Access Response (RAR) related to TRP 2 (e.g., a non-serving cell or additional Physical Cell Identity (PCI)) can be received from TRP 1 (e.g., a serving cell (primary cell)).

More specifically, i) when the UE transmits a PRACH related to TRP 1 (e.g., serving cell), the UE receives the RAR from TRP 1 (e.g., serving cell). ii) Even when the UE transmits a PRACH related to TRP 2 (e.g., non-serving cell or additional Physical Cell Identity (PCI)), the UE receives the RAR from TRP 1 (because there is the non-ideal backhaul situation). In any case, RAR (PDCCH/PDSCH) is received based on the Type1-PDCCH CSS set configured in the serving cell (primary cell) (e.g. TRP 1).

A time required for the UE to receive the RAR related to TRP 2 (in case of ii above) may be delayed by a backhaul delay (e.g., a time required for the RAR to be forwarded from TRP 2 to TRP 1) compared to a time required for the UE to receive the RAR related to TRP 1 (i above).

[DISCLOSURE]

[TECHNICAL PROBLEM]

As described above, the delay that occurs in the non-ideal backhaul environment can result in the following problems. When two TAGs configured in the serving cell are managed, the time required to receive the RAR in the random access procedure initiated by a PDCCH order may vary per TAG (and/or per PCI). However, when the RAR is received based on one/same ra-response window (set in the serving cell), an RAR related to a specific TAG (e.g., TRP, non-serving cell, or additional PCI) may not be received properly.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in wireless communication according to an embodiment of the presnet dislcosure comprises receiving configuration information, transmitting a Physical Random Access CHannel (PRACH), and receiving the RAR based on a window related to a Random Access Response (RAR).

The configuration information includes i) a first Random Access CHannel (RACH) configuration related to a Physical Cell Identity (PCI) of a serving cell, and ii) a second RACH configuration related to an additional PCI.

The PRACH is transmitted based on a Random Access procedure being initiated.

The RAR is related to one of two Timing Advance Groups (TAGs). The PCI of the serving cell is related to a first TAG of the two TAGs, and the additional PCI is related to a second TAG of the two TAGs.

Based on the PRACH being related to the PCI of the serving cell, a length of the window is determined based on a response window parameter related to the first RACH configuration.

Based on the PRACH being related to the additional PCI, a length of the window is determined based on a response window parameter related to the second RACH configuration.

The RAR may be received based on a Physical Downlink Control Channel (PDCCH) and a Physical Downlink Shared Channel (PDSCH).

The serving cell may be a primary cell or a secondary cell. The PDCCH may be received based on a Type1-PDCCH Common Search Space (CSS) set configured in the primary cell.

A transport block may be received in the Physical Downlink Shared Channel (PDSCH) scheduled based on a DCI format 1_0 related to the PDCCH. The RAR may be based on the transport block.

The method may further comprise receiving a Physical Downlink Control Channel (PDCCH) order. The random access procedure may be initiated by the PDCCH order.

The PRACH related to the PCI or the additional PCI of the serving cell may be transmitted based on the reception of the PDCCH order.

The PDCCH order may be based on Downlink Control Information (DCI).

The response window parameter may represent a number of slots.

The RAR may include a Timing Advance Command applied to the first TAG or the second TAG.

A first $N_{TA,offset}$ and a second $N_{TA,offset}$ may be configured based on the configuration information. The first $N_{TA,offset}$ may be related to the first TAG and the second $N_{TA,offset}$ is related to the second TAG.

The method may further comprise receiving configuration information related to COntrol REsource SETs (CORESETs). i) first CORESETs related to a first CORESET pool index and ii) second CORESETs related to a second CORESET pool index may be configured based on the configuration information related to the CORESETs. The first CORESET pool index may be related to the first TAG. The second CORESET pool index may be related to the second TAG.

A user equipment operating in a wireless communication system according to another embodiment of the presnet dislcosure comprises one or more transceivers, one or more processors, and one or more memories connected to the one or more processors and storing instructions.

The instructions configure the one or more processors to perform all steps of any one of the above-described methods based on being executed by the one or more processors.

A device according to another embodiment of the presnet dislcosure comprises one or more memories and one or more processors operably connected to the one or more memories.

The one or more memories store instructions that configure the one or more processors to perform all steps of any one of the above-described methods based on being executed by the one or more processors.

One or more non-transitory computer readable mediums according to another embodiment of the presnet dislcosure store instructions. The instructions executable by one or more processors configure the one or more processors to perform all steps of any one of the above-described methods.

A method performed by a base station in wireless communication according to another embodiment of the presnet dislcosure compries transmitting configuration information, receiving a Physical Random Access CHannel (PRACH), and transmitting the RAR based on a window related to a Random Access Response (RAR).

The configuration information includes i) a first Random Access CHannel (RACH) configuration related to a Physical Cell Identity (PCI) of a serving cell, and ii) a second RACH configuration related to an additional PCI.

The PRACH is received based on a Random Access procedure being initiated.

The RAR is related to one of two Timing Advance Groups (TAGs). The PCI of the serving cell is related to a first TAG of the two TAGs, and the additional PCI is related to a second TAG of the two TAGs.

Based on the PRACH being related to the PCI of the serving cell, a length of the window is determined based on a response window parameter related to the first RACH configuration.

Based on the PRACH being related to the additional PCI, a length of the window is determined based on a response window parameter related to the second RACH configuration.

A base station operating in a wireless communication system according to another embodiment of the presnet dislcosure comprises one or more transceivers, one or more processors, and one or more memories connected to the one or more processors and storing instructions.

The instructions configure the one or more processors to perform all steps of any one of the above-described methods based on being executed by the one or more processors.

[ADVANTAGEOUS EFFECTS]

According to an embodiment of the present disclosure, based on a PRACH being related to a PCI, a length of a window for RAR reception is determined based on a response window parameter related to a first RACH configuration. Further, based on the PRACH being related to an additional PCI, the length of the window is determined based on a response window parameter related to a second RACH configuration.

Since a window with a specific length is configured for each TRP/TAG and the RAR is received based thereon, a second TA related to the additional PCI can be obtained more stably than a case where a window with the same length as the first TRP (serving cell) is used.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.

FIG. 2 illustrates a timing advance command MAC CE according to an embodiment of the present disclosure.

FIG. 3 is a flowchart illustrating a method performed by a UE according to an embodiment of the present disclosure.

FIG. 4 is a flowchart illustrating a method performed by a base station according to another embodiment of the present disclosure.

FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. In this case, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used in resource 1 and the UL TCI state used in resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

<Meaning of TCI state/ beam indication>

In addition, in the methods proposed by the present disclosure below, a meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/space resource may mean estimating a channel from a DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may mean spatial relation info of the SRS resource which may be directly indicated by UL grant DCI or is indicated through the SRI field of the UL grant DCI.

Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

Uplink frame number $i$ for transmission from the UE shall start $T_{\text{TA}} = \left(N_{\text{TA}} + N_{\text{TA,offset}} + N_{\text{TA,adj}}^{\text{common}} + N_{\text{TA,adj}}^{\text{UE}}\right)T_{\text{c}}$ before the start of the corresponding downlink frame at the UE where
- $N_{\text{TA}}$ and $N_{\text{TA,offset}}$ are given by clause 4.2 of [5, TS 38.213], except for msgA transmission on PUSCH where $N_{\text{TA}}$ = 0 shall be used;

- $N_{\text{TA,adj}}^{\text{common}}$ given by clause 4.2 of [5, TS 38.213] is derived from the higher-layer parameters *TACommon, TACommonDrift,* and *TA CommonDrift Variation* if configured, otherwise $N_{\text{TA,adj}}^{\text{common}} = 0$;

- $N_{\text{TA,adj}}^{\text{UE}}$ given by clause 4.2 of [5, TS 38.213] is computed by the UE based on UE position and serving-satellite-ephemeris-related higher-layers parameters if configured, otherwise $N_{\text{TA,adj}}^{\text{UE}} = 0$.

In Table 1, $T_{TA}$ may be calculated/determined based on $N_{\text{TA}}$ and $N_{\text{TA,offset}}$. $N_{\text{TA}}$ and $N_{\text{TA,offset}}$ may be configured/applied as follows.

$N_{\text{TA}}$: 1) configuring through a random access response (RAR) and 2) configuring through timing advance command (MAC-CE)
$N_{\text{TA,offset}}$: 1) configuring a specific value per serving cell and 2) applying a pre-defined value based on duplex mode/FR suitably to the serving cell

A method of configuring/applying $N_{\text{TA,offset}}$ and $N_{\text{TA}}$ described above is described in detail below.

$N_{\text{TA,offset}}$

Case 1) Method of configuring a specific value per serving cell

For example, a UE may receive configuration information (e.g., ServingCellConfigCommon Information) including information on $N_{\text{TA,offset}}$ from a base station. The configuration information may be received based on RRC signaling. Table 2 below shows the configuration information.

【Table 2】

| |
|---|
| – *ServingCellConfigCommon*<br>The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with |

a SCells or with an additional cell group (SCG). It also provides it for SpCells (MCG and SCG) upon reconfiguration with sync.

***ServingCellConfigCommon* information element**

-- ASN1START

-- TAG-SERVINGCELLCONFIGCOMMON-START


ServingCellConfigCommon ::=          SEQUENCE {
    physCellId                                                    PhysCellId
OPTIONAL,     -- Cond HOAndServCellAdd,
    downlinkConfigCommon                          DownlinkConfigCommon
OPTIONAL,     -- Cond HOAndServCellAdd
    uplinkConfigCommon                               UplinkConfigCommon
OPTIONAL,     -- Need M
    supplementaryUplinkConfig                      UplinkConfigCommon
OPTIONAL,     -- Need S
        n-TimingAdvanceOffset                 ENUMERATED  {  n0,  n25600,  n39936  }
OPTIONAL,     -- Need S

                                    (...)

}

-- TAG-SERVINGCELLCONFIGCOMMON-STOP

-- ASN1STOP

***n-TimingAdvanceOffset***

The N_TA-Offset to be applied for all uplink transmissions on this serving cell. If the field is absent, the UE applies the value defined for the duplex mode and frequency range of this serving cell. See TS 38.133 [14], table 7.1.2-2.

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

【Table 3】

<table>
<tr><td colspan="2" align="center">Table 7.1.2-2: The Value of $N_{\text{TA offset}}$</td></tr>
<tr><td><b>Frequency range and band of cell used for uplink transmission</b></td><td><b>$N_{\text{TA offset}}$ (Unit: $T_C$)</b></td></tr>
<tr><td>FR1 FDD or TDD band with neither E-UTRA–NR nor NB-IoT–NR coexistence case</td><td>25600 (Note 1)</td></tr>
<tr><td>FR1 FDD band with E-UTRA–NR and/or NB-IoT–NR coexistence case</td><td>0 (Note 1)</td></tr>
<tr><td>FR1 TDD band with E-UTRA–NR and/or NB-IoT–NR coexistence case</td><td>39936 (Note 1)</td></tr>
<tr><td>FR2</td><td>13792</td></tr>
<tr><td colspan="2">[1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.<br><br>[2] Note 2: Void</td></tr>
</table>

$N_{TA}$

Case 1) Method of configuring through a random access response (RAR)

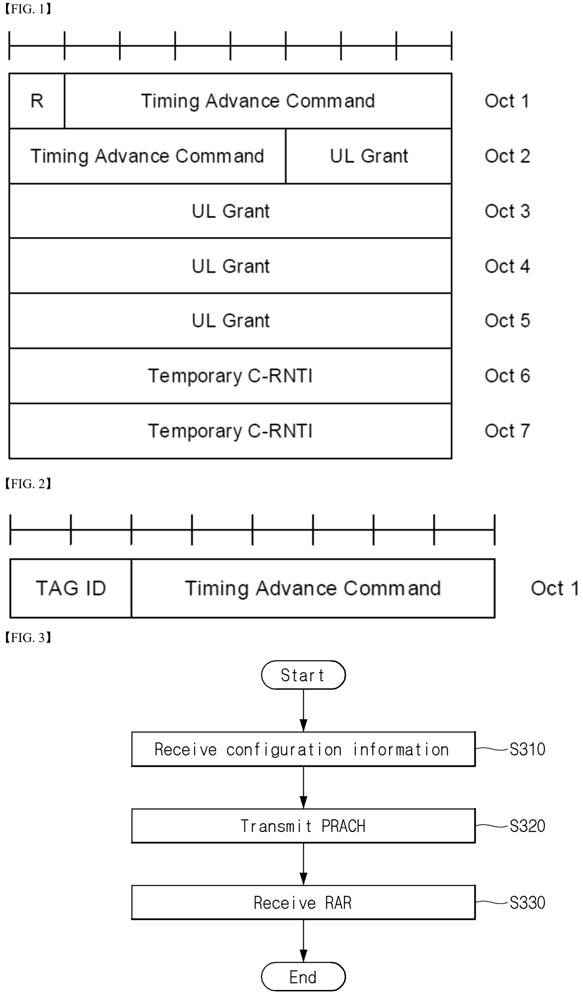

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

6.2.3 MAC payload for Random Access Response

The MAC RAR is of fixed size as depicted in Figure 6.2.3-1, and consists of the following fields:

- R: Reserved bit, set to 0;

- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;

- Timing Advance Command: The Timing Advance Command field indicates the index value $T_A$ used to control the amount of timing adjustment that the MAC entity has to apply in TS 38.213 [6]. The size of the Timing Advance Command field is 12 bits;

- UL Grant: The Uplink Grant field indicates the resources to be used on the uplink in TS 38.213 [6]. The size of the UL Grant field is 27 bits;

- Temporary C-RNTI: The Temporary C-RNTI field indicates the temporary identity that is used by the MAC entity during Random Access. The size of the Temporary C-RNTI field is 16 bits. The MAC RAR is octet aligned.

Table 5 below shows transmission timing adjustments based on the timing advance command.

[Table 5]

4.2 Transmission timing adjustments

A UE can be provided a value $N_{TA,offset}$ of a timing advance offset for a serving cell by *n-TimingAdvanceOffset* for the serving cell. If for a serving cell the UE is provided two *coresetPoolIndex values 0 and 1 for first and second CORESETs, or is not provided coresetPoolIndex value for first CORESETs and is provided coresetPoolIndex value of 1 for second CORESETs, the UE can be provided first and second* $N_{TA,offset}$ *values by n-TimingAdvanceOffset* and *n-TimingAdvanceOffset2* for transmissions with TCI states associated with the first and second CORESETs, respectively. A UE can be *provided a second* $N_{TA,offset}$ value for transmissions with spatial domain filters corresponding to TCI states associated with *physCellId* different from *physCellId* for the serving cell in addition to a first $N_{TA,offset}$ value for transmissions with spatial domain filters corresponding to TCI states associated with *physCellId* for the serving cell. The *first and second* $N_{TA,offet}$ values correspond to first and second TAGs [11, TS 38.321] having an association indicated by *tag-Id-ptr* with first and second joint TCI states provided by *dl-OrJointTCI-StateList* or first and second UL TCI states provided by *ul-TCI-State-List*. If the UE is not provided *n-TimingAdvanceOffset* for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG. For a band with synchronous contiguous intra-band EN-DC in a band combination with non-applicable maximum transmit timing difference requirements as described in Note 1 of Table 7.5.3-1 of [10, TS 38.133], if the UE indicates *ul-TimingAlignmentEUTRA-NR* as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell

in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^{\mu} \cdot 15$ kHz, the timing advance command for a TAG indicates the change of the uplink timing relative to the current uplink timing for the TAG in multiples of $16 \cdot 64 \cdot T_c/2^{\mu}$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A$ = 0, 1, 2, ..., 3846, where an amount of the time alignment for the TAG with SCS of $2^{\mu} \cdot 15$ kHz is $N_{TA} = T_A \cdot 16 \cdot 64/2^{\mu}$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A$ = 0, 1, 2,..., 63, where for a SCS of $2^{\mu} \cdot 15$ kHz, $N_{TA\_new} = N_{TA\_old} + (T_A - 31) \cdot 16 \cdot 64/2^{\mu}$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot $n + k + 1 + 2^{\mu} \cdot K_{offset}$ where $k =$

$$\left\lceil N_{slot}^{subframe,\mu} \cdot \left( N_{T,1} + N_{T,2} + N_{TA,max} + 0.5 \right) / T_{sf} \right\rceil$$ , $N_{T,1}$ is a time duration in msec of $N_f$ symbols corresponding to a PDSCH processing time for UE processing capability 1 when additional PDSCH DM-RS is configured, $N_{T,2}$ is a time duration in msec of $N_2$ symbols corresponding to a PUSCH preparation time for UE processing capability 1 [6, TS 38.214], $N_{TA,max}$ is the maximum timing advance value in msec that can be provided by a TA command field of 12 bits, $N_{slot}^{subframe,\mu}$ is the number of slots per subframe, $T_{sf}$ is the subframe duration of 1 msec, and $K_{offset}$ = $K_{cell,offset}$ - $K_{UE,offset}$, where $K_{cell,offset}$ is provided by *cellSpecificKoffset* and $K_{UE,offset}$ is provided by a Differential Koffset MAC CE command [11, TS 38.321]; otherwise, if not respectively provided, $K_{cell,offset}$ = 0 or $K_{UE,offset}$ = *0*. $N_1$ and $N_2$ are determined with respect to the minimum SCS among the SCSs of all configured UL BWPs for all uplink carriers in the TAG and of all configured DL BWPs for the corresponding downlink carriers. For $\mu$ = 0, the UE assumes $N_{1,0}$ = *14* [6, TS 38.214]. Slot n and $N_{slot}^{subframe,\mu}$ are determined with respect to the minimum SCS among the SCSs of all configured UL BWPs for all uplink carriers in the TAG. $N_{TA,max}$ is determined with respect to the minimum SCS among the SCSs of all configured UL BWPs for all uplink carriers in the TAG and for all configured initial UL BWPs provided by *initialUplinkBWP*. The uplink slot *n* is the last slot among uplink slot(s) overlapping with the slot(s) of PDSCH reception assuming $T_{TA}$ = 0, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{TA}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates *larger-thanCP-capability.* If a UE indicates *XYZ_capability,* is provided *SRS-autonomousTAupdate* [10, TS 38.133], and transmits SRS based on a configuration by *SRS-PosResourceSet* in *SRS-PosRRC-InactiveConfig-ValidityArea* in RRC_INACTIVE state, the UE may autonomously update $N_{TA}$ at cell reselection; else, if the UE is not provided *SRS-autonomousTAupdate,* the UE maintains the $N_{TA}$ of a last serving cell prior to the release of a dedicated RRC connection [11, TS 38.321].

For operation with single TAG on a serving cell, if two adjacent slots overlap due to a TA command, the latter slot is reduced in duration relative to the former slot. The UE does not change $N_{TA}$ during an actual transmission time window for a PUSCH or a PUCCH transmission [6, TS 38.214]. If the UE is not provided *enableSTx2PofMDCI* and operates with two TAGs on a serving cell, the UE does not expect transmissions associated with different TAGs to overlap unless the UE indicates *XYZ;* if the UE indicates *XYZ,* the UE reduces in duration a latter transmission using a first TAG to avoid overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of $N_{TA}$ based on the timing advance command is the same as what was described in the Case 1, duplicate descriptions are omitted (see Table 5). The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. Table 6 below shows payload of the timing advance command MAC CE.

[Table 6]

| 6.1.3.4 Timing Advance Command MAC CE |
| --- |

(continued)

The Timing Advance Command MAC CE is identified by MAC subheader with LCID as specified in Table 6.2.1-1. It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;

- Timing Advance Command: This field indicates the index value $T_A$ (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.

It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;

- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;

- R: Reserved bit, set to 0.

Timing Advance Group (TAG)

A timing advance group (TAG) refers to a group of serving cells that use the same timing advance value. Table 7 below shows definition of the TAG and configuration information related to the TAG.

【Table 7】

| |
|---|
| **Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.<br><br>*TAG-Config*<br><br>The IE *TAG-Config* is used to configure parameters for a time-alignment group.<br><div align="center">***TAG-Config* information element**</div><br>-- ASN1START<br>-- TAG-TAG-CONFIG-START<br><br>TAG-Config ::=       SEQUENCE {<br>   tag-ToReleaseList         SEQUENCE (SIZE (1..maxNrofTAGs)) OF TAG-Id OPTIONAL, -- Need N<br>   tag-ToAddModList         SEQUENCE (SIZE (1..maxNrofTAGs)) OF TAG OPTIONAL -- Need N<br>}<br><br>TAG ::=         SEQUENCE {<br>   tag-Id         TAG-Id,<br>   timeAlignmentTimer       TimeAlignmentTimer,<br>   ...<br>}<br><br>TAG-Id ::=        INTEGER (0..maxNrofTAGs-1) |
| ***tag-Id***<br>Indicates the TAG of the SpCell or an SCell, see TS 38.321 [3]. Uniquely identifies the TAG within the scope |

| | |
|---|---|
| of a Cell Group (i.e. MCG or SCG). | |
| **timeAlignmentTimer** | |
| The timeAlignmentTimer for TAG with ID tag-Id, as specified in TS 38.321 [3]. | |
| **maxNrofTAGs**        INTEGER ::= 4 -- Maximum number of Timing Advance Groups | |

–        *CellGroupConfig*

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

**CellGroupConfig information element**

-- ASN1START

-- TAG-CELLGROUPCONFIG-START

-- Configuration of one Cell-Group:

CellGroupConfig ::=                    SEQUENCE {

---

cellGroupId                                CellGroupId,
    rlc-BearerToAddModList                        SEQUENCE (SIZE(1..maxLC-ID)) OF RLC-BearerConfig                    OPTIONAL,      -- Need N
    rlc-BearerToReleaseList                        SEQUENCE (SIZE(1..maxLC-ID)) OF LogicalChannelIdentity            OPTIONAL,      -- Need N
    mac-CellGroupConfig                                                            MAC-CellGroupConfig
OPTIONAL,      -- Need M
    physicalCellGroupConfig                                                        PhysicalCellGroupConfig
OPTIONAL,      -- Need M
    spCellConfig                                                                   SpCellConfig
OPTIONAL,      -- Need M
    sCellToAddModList                                  SEQUENCE (SIZE (1..maxNrofSCells)) OF
SCellConfig                        OPTIONAL,      -- Need N
    sCellToReleaseList                                 SEQUENCE (SIZE (1..maxNrofSCells)) OF
SCellIndex                         OPTIONAL,      -- Need N
                                    (...)

**MAC-CellGroupConfig**

The IE MAC-CellGroupConfig is used to configure MAC parameters for a cell group, including DRX.

**MAC-CellGroupConfig information element**

-- ASN1START

-- TAG-MAC-CELLGROUPCONFIG-START


MAC-CellGroupConfig ::=              SEQUENCE {
    drx-Config                                                           SetupRelease { DRX-Config }
OPTIONAL,      -- Need M
    schedulingRequestConfig                                              SchedulingRequestConfig
OPTIONAL,      -- Need M
    bsr-Config                                                           BSR-Config
OPTIONAL,      -- Need M
    tag-Config                                                           TAG-Config

```
OPTIONAL,      -- Need M
    phr-Config                                           SetupRelease  {  PHR-Config  }
OPTIONAL,      -- Need M
    skipUplinkTxDynamic              BOOLEAN,
                                          (…)
```

**CellGroupId**

The IE CellGroupId is used to identify a cell group. Value 0 identifies the master cell group. Other values identify secondary cell groups. In this version of the specification only values 0 and 1 are supported.

***CellGroupId information element***

**-- ASN1START**

```
-- TAG-CELLGROUPID-START
CellGroupId ::=                          INTEGER (0.. maxSecondaryCellGroups)
-- TAG-CELLGROUPID-STOP
-- ASN1STOP
```

```
maxSecondaryCellGroups INTEGER ::= 3
```

Procedure

Uplink time alignment may be performed based on Table 8 below.

[Table 8]

| 5.2 Maintenance of Uplink Time Alignment |
|---|
| RRC configures the following parameters for the maintenance of UL time alignment: |
| - *timeAlignmentTimer* (per TAG) which controls how long the MAC entity considers the Serving Cells belonging to the associated TAG to be uplink time aligned; |
| - *inactivePosSRS-TimeAlignmentTimer* which controls how long the MAC entity considers the Positioning SRS transmission in RRC _INACTIVE in clause 5.26 to be uplink time aligned; |
| - *cg-SDT-TimeAlignmentTimer* which controls how long the MAC entity considers the uplink transmission for CG-SDT to be uplink time aligned. |
| The MAC entity shall: |
| 1> when a Timing Advance Command MAC CE is received, and if an $N_{TA}$ (as defined in TS 38.211 [8]) has been maintained with the indicated TAG: |
| 2> apply the Timing Advance Command for the indicated TAG; |
| 2> if there is ongoing Positioning SRS Transmission in RRC_INACTIVE as in clause 5.26: |
| 3> start or restart the *inactivePosSRS-TimeAlignmentTimer* associated with the indicated TAG. |
| 2> if CG-SDT procedure triggered as in clause 5.27 is ongoing: |
| 3> start or restart the *cg-SDT-TimeAlignmentTimer* associated with the indicated TAG. |
| 2> else: |
| 3> start or restart the *timeAlignmentTimer* associated with the indicated TAG. |
| 1> when a Timing Advance Command is received in a Random Access Response message for a Serving Cell belonging to a TAG or in a MSGB for an SpCell: |
| 2> if the Random Access Preamble was not selected by the MAC entity among the contention-based Random Access Preamble: |
| 3> apply the Timing Advance Command for this TAG; |
| 3> start or restart the *timeAlignmentTimer* associated with this TAG. |
| 2> else if the *timeAlignmentTimer* associated with this TAG is not running: |
| 3> apply the Timing Advance Command for this TAG; |
| 3> start the *timeAlignmentTimer* associated with this TAG; |

(continued)

3> when the Contention Resolution is considered not successful as described in clause 5.1.5; or

3> when the Contention Resolution is considered successful for SI request as described in clause 5.1.5, after transmitting HARQ feedback for MAC PDU including UE Contention Resolution Identity MAC CE:

4> stop *timeAlignmentTimer* associated with this TAG.

3> when the Contention Resolution is considered not successful as described in clause 5.1.5:

4> if CG-SDT procedure triggered as in clause 5.27 is ongoing:

5> set the $N_{TA}$ value to the value before applying the received Timing Advance Command as in TS 38.211 [8].

3> when the Contention Resolution is considered successful for Random Access procedure while the CG-SDT procedure is ongoing:

4> stop *timeAlignmentTimer* associated with this TAG;

4> start or restart the *cg-SDT-TimeAlignmentTimer* associated with this TAG.

3> when the Contention Resolution is considered successful for Random Access procedure while SRS transmission in RRC_INACTIVE is ongoing:

4> start or restart the *inactivePosSRS-TimeAlignmentTimer* associated with this TAG.

2> else:

3> ignore the received Timing Advance Command.

1> when an Absolute Timing Advance Command is received in response to a MSGA transmission including C-RNTI MAC CE as specified in clause 5.1.4a:

2> apply the Timing Advance Command for PTAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure is ongoing:

3> start or restart the *cg-SDT-TimeAlignmentTimer* associated with PTAG.

2> else:

3> start or restart the *timeAlignmentTimer* associated with PTAG.

1> when the indication is received from upper layer for stopping the *inactivePosSRS-TimeAlignmentTimer:*

2> stop the *inactivePosSRS-TimeAlignmentTimer.*

1> when the indication is received from upper layer for starting the *inactivePosSRS-TimeAlignmentTimer:*

2> start or restart the *inactivePosSRS-TimeAlignmentTimer.*

1> when instruction from the upper layer has been received for starting the *cg-SDT-TimeAlignmentTimer:*

2> start the *cg-SDT-TimeAlignmentTimer.*

1> when instruction from the upper layer has been received for stopping the *cg-SDT-TimeAlignmentTimer:*

2> consider the *cg-SDT-TimeAlignmentTimer* as expired.

1> when instruction from the upper layer has been received for starting the *TimeAlignmentTimer* associated with PTAG:

2> start the *TimeAlignmentTimer* associated with PTAG.

1> when a *timeAlignmentTimer* expires:

2> if the *timeAlignmentTimer* is associated with the PTAG:

3> flush all HARQ buffers for all Serving Cells;

3> notify RRC to release PUCCH for all Serving Cells, if configured;

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain $N_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured;

3> notify RRC to release SRS, if configured;

3> clear any configured downlink assignments and configured uplink grants;

3> clear any PUSCH resource for semi-persistent CSI reporting;

(continued)

3> maintain $N_{TA}$ (defined in TS 38.211 [8]) of this TAG.

1> when the *inactivePosSRS-TimeAlignmentTimer* expires:

2> notify RRC to release Positioning SRS for RRC_INACTIVE configuration(s).

1> when the *cg-SDT-TimeAlignmentTimer* expires:

2> clear any configured uplink grants;

2> if a PDCCH addressed to the MAC entity's C-RNTI after initial transmission for the CG-SDT with CCCH message has not been received:

3> consider ongoing CG-SDT procedure as terminated;

3> indicate the expiry of *cg-SDT- TimeAlignmentTimer* to the upper layer.

2> flush all HARQ buffers;

2> maintain $N_{TA}$ (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.

The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC_INACTIVE as in clause 5.26 is not on-going.

Furthermore, when the *timeAlignmentTimer* associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the *cg-SDT-TimeAlignmentTimer* is not running during the ongoing CG-SDT procedure as triggered in clause 5.27. The MAC entity shall not perform any uplink transmission except the Random Access Preamble and MSGA transmission when *inactivePosSRS-TimeAlignmentTimer* is not running during the procedure for SRS transmission in RRC_INACTIVE as in clause 5.26.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, timing advance (TA) setting for UE uplink transmission of the base station to compensate for the propagation delay between the base station and the UE may be performed through higher layer signaling. Further, a TA for a specific group of cell(s) may be set/managed separately through a concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 9 below, the configuration of TA values for multi-DCI (M-DCI) based M-TRP operation is considered.

[Table 9]

5. Study, and if justified, specify the following
- Two TAs for UL multi-DCI for multi-TRP operation
- Power control for UL single DCI for multi-TRP operation where unified TCI framework extension in objective 2 is assumed.

(continued)

| For the case of simultaneous UL transmission from multiple panels, the operation will only be limited to the objective 6 scenarios. |
| --- |

Here, the TA (TA value) may be based on the description of FIG. 2 and the contents described in the timing advance (TA) related procedure described above.

In RAN1 and RAN2 standards prior to Rel-18, the base station manages UE TA values through values called $N_{TA}$ and $N_{TA,offset}$. The base station may set $N_{TA}$ as follows. The base station may i) set $N_{TA}$ via RAR MAC CE or ii) set $N_{TA}$ via timing advance command MAC CE (TA command MAC CE). In addition, the base station may utilize the concept of the Timing Advance Group (TAG) to configure up to 4 TAGs per UE for a specific cell or cell combination and perform update/management of an $N_{TA}$ value for each TAG.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

Meanwhile, in Rel-18 MIMO, an agreement is reached regarding two TAs, as shown in Table 10 below.

[Table 10]

| **Agreement** |
| --- |
| For multi-DCI based multi-TRP operation with two TAs, support configuring two TAGs belonging to a serving cell. |

| **Agreement** |
| --- |
| For multi-DCI multi-TRP operation with two TAs in a CC, two DL reference timings are supported where each DL reference timing is associated with one TAG <br><br>• baseline assumption is that the Rx timing difference between the two DL reference timings is no larger than CP length <br><br>• as an optional UE capability, Rx timing difference between the two DL reference timings can be assumed to be larger than CP length <br><br>o FFS: the maximum Rx timing difference (could be up to RAN4) <br><br>o Other than UE capability details and relevant configuration, no additional RAN1 specification enhancement specific for this case is expected |

As described above, it is discussed that two TAGs may be configured to manage two TA values in one serving cell, and it is also agreed that a reference timing to apply the TA value managed in each TAG would support two DL reference timings in one serving cell.

In this case, RACH transmission may be utilized for the UE to acquire multiple TA values. As a standardization discussion result, it is agreed to first utilize RACH transmission based on contention-free random access (CFRA).

It is agreed to support an operation (cross-TRP RACH triggering) in which a specific TRP triggers, to the UE, RACH transmission to another TRP in an M-DCI based M-TRP environment. In this case, when there is a non-ideal backhaul situation between TRPs, a delay equal to the backhaul delay occurs until the information that a specific TRP triggers an RACH to the UE is transmitted to another TRP.

As an example, in case of an inter-cell M-DCI based TRP, a Random Access Response (RAR) of TRP 2 (e.g., a non-serving cell or additional Physical Cell Identity (PCI)) may be received from TRP 1 (e.g., a serving cell (primary cell)).

More specifically, i) the UE that transmits a PRACH related to TRP 1 (e.g., serving cell) receives the RAR from TRP 1 (e.g., serving cell). ii) The UT that transmits a PRACH related to TRP 2 receives the RAR from TRP 1 (because there is the non-ideal backhaul situation between TRPs).

A time required for the UE to receive the RAR related to TRP 2 (in case of ii above) may be delayed by a backhaul delay (e.g., a time required for the RAR to be forwarded from TRP 2 to TRP 1 (a forwarding delay)) compared to a time required for the UE to receive the RAR related to TRP 1 (i above).

Existing UE operations related to RAR reception are as follows.

After transmitting a PRACH (related to additional PCI or serving cell PCI), the UE monitors PDCCH candidates in the Typel-PDCCH CSS set configured in the serving cell (e.g., primary cell). The UE receives the PDCCH based on the monitoring. The UE receives a PDSCH scheduled by DCI format 1_0 related to the PDCCH. The UE receives a transport block in the PDSCH. The RAR is based on the transport block.

When the UE uses a legacy RAR reception window, a problem may occur where the RAR may not be continuously received depending on a size of the backhaul delay.

Based on the above-described background, the present disclosure describes a method for the base station to configure/indicate RACH transmission of the UE, and proposes subsequent UE operations. Specifically, i) a method for configuring/indicating a TRP(/CORESET pool index/TAG)-specific RAR window and ii) a method for configuring/indicating a specific starting offset for a RAR window related to a specific TRP(/CORESET pool index/TAG)-specific RACH are described. Specifically, operations related to the RAR window may be performed based on Table 11 below.

[Table 11]

| **Type-1 random access response(4-step RACH)** |
|---|
| In response to a PRACH transmission, a UE attempts to detect a DCI format 1_0 with CRC scrambled by a corresponding RA-RNTI during a window controlled by higher layers [11, TS 38.321]. The window starts at the first symbol of the earliest CORESET the UE is configured to receive PDCCH for Type1-PDCCH CSS set, as defined in clause 10.1, that is at least one symbol, after the last symbol of the PRACH occasion corresponding to the PRACH transmission, where the symbol duration corresponds to the SCS for Type1-PDCCH CSS set as defined in clause 10.1. If $N_{\mathrm{TA,adj}}^{\mathrm{UE}}$ or $N_{\mathrm{TA,adj}}^{\mathrm{common}}$ ,as defined in [4, TS 38.211], is not zero, the window starts after an additional $T_{TA}$ + $k_{mac}$ msec where $T_{TA}$ is defined in [4, TS 38.211] and $k_{mac}$ is provided by *K-Mac* or $k_{mac}$ = 0 *if K-Mac* is not provided. The length of the window in number of slots, based on the SCS for Type1-PDCCH CSS set, is provided by *ra-ResponseWindow.* |
| **Type-2 random access response(2-step RACH)** |
| In response to a transmission of a PRACH and a PUSCH, or to a transmission of only a PRACH if the PRACH preamble is mapped to a valid PUSCH occasion, a UE attempts to detect a DCI format 1_0 with CRC scrambled by a corresponding MsgB-RNTI during a window controlled by higher layers [11, TS 38.321]. The window starts at the first symbol of the earliest CORESET the UE is configured to receive PDCCH for Type1-PDCCH CSS set, as defined in clause 10.1, that is at least one symbol, after the last symbol of the PUSCH occasion corresponding to the PRACH transmission, where the symbol duration corresponds to the SCS for Type1-PDCCH CSS set. If $N_{\mathrm{TA,adj}}^{\mathrm{UE}}$ or $N_{\mathrm{TA,adj}}^{\mathrm{common}}$ , as defined in [4, TS 38.211], is not zero, the window starts after an additional $T_{TA}$ + $k_{mac}$ msec where $T_{TA}$ is defined in [4, TS 38.211] and $k_{mac}$ is provided by *K-Mac* or $k_{mac}$ = 0 *if K-Mac* is not provided. The length of the window in number of slots, based on the SCS for Type1-PDCCH CSS set, is provided by *msgB-ResponseWindow.* |
| In response to a transmission of a PRACH, if the PRACH preamble is not mapped to a valid PUSCH occasion, a UE attempts to detect a DCI format 1_0 with CRC scrambled by a corresponding MsgB-RNTI during a window controlled by higher layers [11, TS 38.321]. The window starts at the first symbol of the earliest CORESET the UE is configured to receive PDCCH for Type1-PDCCH CSS set, as defined in clause 10.1, that is at least one symbol, after the last symbol of the PRACH occasion corresponding to the PRACH transmission, where the symbol duration corresponds to the SCS for Type1-PDCCH CSS set. The length of the window in number of slots, based on the SCS for Type1-PDCCH CSS set, is provided by *msgB-ResponseWindow.* |

In the present disclosure, '/' may be interpreted as 'and', 'or', or 'and/or' according to a context.

Proposal 1

When the UE supports two TAs in a specific serving cell, a method for (separately) configuring/indicating a TRP (/CORESET pool index/TAG)-specific RAR window may be considered.

When the UE transmits the RACH related to/corresponding to the specific TRP (/CORESET pool index/TAG), the RAR may be received based on the configured/indicated TRP (/CORESET pool index /TAG)-specific RAR window.

(Considering the non-ideal backhaul situation in the M-DCI based M-TRP DL/UL scenario), the RAR window may be configure/indicated/defined as follows.

As an example, the base station may configure/indicate a separate (longer) RAR window for PRACH transmission related to/corresponding to a specific TRP/TAG/CORESET pool index.

As an example, a RAR window for PRACH transmission related to/corresponding to a specific TRP/TAG/CORESET pool index may be defined in advance (between terminals/base stations or in UE/base station implementation).

As a specific example, when a PRACH related to a first TRP/first TAG/first CORESET pool index is transmitted, an RAR related to the first TRP/first TAG/first CORESET pool index may be received based on a first RAR window. When a PRACH related to a second TRP/second TAG/second CORESET pool index is transmitted, an RAR related to the second TRP/second TAG/second CORESET pool index may be received based on a second RAR window. The first RAR window may be configured separately from the second RAR window. The first RAR window may be configured based on a first RACH configuration (e.g., an RACH configuration related to TRP 1/serving cell/serving cell PCI). The second RAR window may be configured based on a second RACH configuration (e.g., an RACH configuration related to TRP 2/serving cell/serving cell PCI).

A length of the first RAR window (or the second RAR window) may be set to be greater than the length of the second RAR window (or the first RAR window).

According to an existing scheme, only one RAR window is configured to be cell-specific. Specifically, the RAR window according to the existing scheme is configured based on one ra-ResponseWindow parameter (e.g., Serving-CellConfigCommon -> UplinkConfigCommon -> BWP-UplinkCommon -> rach-ConfigCommon -> rach-ConfigGeneric -> ra - Response Window). The ra-ResponseWindow parameter represents a length (the number of slots) of the window.

According to the embodiment, two or more RAR windows may be configured even in a specific serving cell. As an example, two or more TRP (/TAG/CORESET pool index)-specific RAR windows (i.e., *ra-ResponseWindow* and/or *msgB-ResponceWindows*) may be configured. The embodiment may be equally applied in an Inter-cell M-DCI environment. For example, the UE may receive, from the base station, a first RACH configuration related to TRP 1 (e.g., serving cell or PCI) and a second RACH configuration related to TRP 2 (e.g., non-serving cell or additional PCI). Each of the first and second RACH configurations may include a response window parameter. An RAR window may be configured based on the response window parameter of each RACH configuration.

As an additional embodiment, a separate RAR window may be utilized only for RACH transmission related to a specific TAG/TRP/CORESET pool index.

As an example, a separate RAR window may be configured/indicated with respect to RACH transmission related to a second TAG/TRP/CORESET pool index (i.e., CORESETpoolIndex = 1) within a specific serving cell.

As an example, an RAR window based on a separately defined value (e.g., the number of slots for determining the length of the window) may be used with respect to the RACH transmission related to the second TAG/TRP/CORESET pool index (i.e., CORESETpoolIndex = 1) within the specific serving cell.

In this case, the UE may operate the RACH transmission related to the first TAG/TRP/CORESET pool index similarly to the existing scheme. That is, after the RACH transmission related to the first TAG/TRP/CORESET pool index, the RAR may be received based on the RAR window configured to be cell-specific.

As an example, the second TAG in the present disclosure may mean a second TAG among TAGs sharing the same component carriers (CCs) and/or bands.

According to Proposal 1, the following problems may be solved.

In the M-DCI based M-TRP DL/UL scenario, when TRPs are connected by non-ideal backhaul, there may be a problem in RAR reception of the UE. When each TRP triggers a (CFRA-based) RACH transmission to the UE, each TRP may utilize a legacy cell-specific RAR window as it is when triggering the RACH transmission to itself. However, when each TRP triggers an RACH directed to another TRP to the UE, there is a delay in transmitting information that the UE will transmit the RACH to another TRP, which may cause a problem in RAR reception of the UE.

It may be assumed that the TRP that receives the RACH does not schedule the RAR, and the TRP that triggers the RACH (e.g., the TRP related to transmission of the PDCCH order) schedules the RAR. For example, it may be assumed that the PRACH is related to TRP 2 (additional PCI) or the RAR related to the RACH is received from TRP 1 (serving cell). In this case, an additional delay may be caused because the TRP that receives the RACH has to forward information that the RACH of the UE is received well to the TRP that triggers the RACH. That is, the delay problem due to the non-ideal backhaul may be further worsened.

In particular, in an intra-cell M-DCI environment and an inter-cell M-DCI environment, the same problems as described above exist according to the existing scheme.

Specifically, a PDCCH order for performing RACH triggering and a RAR scheduling PDCCH (/RAR PDSCH) may be mainly related to a CORESET(s) having a first CORESET pool index. That is, the PDCCH associated with the PDCCH order and/or the RAR is transmitted/received in the CORESET having the first CORESET pool index. This means that i) the PDCCH order for the RACH trigger for the TA update related to each TRP/TAG and ii) the RAR related to each TRP/TAG are both received from one TRP (e.g., serving cell). No delay may occur in the RACH procedure related to the first CORESET pool index/first TAG/serving cell, while an additional delay may occur in an RACH procedure related to with the second CORESET pool Index/second TAG/additional PCI.

The above-described problems may be solved as follows by the operation of Proposal 1. According to Proposal 1, a TRP/TAG/CORESET pool index-specific RAR window may be configured/indicated/defined. That is, each RAR window may be configured/indicated/defined in consideration of a delay in sharing information on RACH triggering between TRPs and/or information on RACH reception, so that the problem in that the RAR is not properly received due to the above-described delay may be solved.

In other words, compared to the case where the RAR related to each TRP/TAG/CORESET pool index is received based on one cell-specific RAR window, the RAR may be received more stably. Thus, the reliability of the random access procedure initiated for TA acquisition/update for each TAG may be enhanced.

Proposal 2

When the UE supports two TAs in a specific serving cell, a method for setting/indicating a specific stating offset for an RAR window related to the TRP (/CORESET pool index/TAG)-specific RACH may be considered.

When the UE transmits the RACH related to/corresponding to the specific TRP (/CORESET pool index/TAG), the RAR for receiving the RAR may start based on the set/indicated starting offset.

Embodiment 1: The base station may set/indicate an additional starting offset/back-off value of t msec and/or n slot for the RAR window starting point related to the RACH related to/corresponding to the specific TRP/TAG/CORESET pool index (by considering the non-ideal backhaul situation in the M-DCI based M-TRP DL/UL scenario). In this case, the window may start after t msec and/or n slots from an existing defined start point.

Embodiment 2: The base station may set/indicate an additional starting offset/back-off value of t msec and/or n slots for an RAR window starting point related to the RACH related to/corresponding to the specific TRP/TAG/CORESET pool index (by considering the non-ideal backhaul situation in the M-DCI based M-TRP DL/UL scenario) in a UE related to a non-terrestrial network (NTN). In this case, the window may start after t msec and/or n slots from an existing defined start point (the window starts after an additional $T_{TA} + k_{mac} + \underline{t}$ msec).

As an example, it is possible to update/reset $k_{mac}$ to be UE-specific (via RRC/MAC CE), the base station may update $k_{mac}$ as a value including up to the non-ideal backhaul delay. That is, the (TRP/TAG/CORESET pool index-specific) RAR window starting offset may be given through updating the $k_{mac}$. In this case, the $k_{mac}$ value may be updated/set to be TRP/TAG/CORESET pool index-specific.

Additionally, in the M-TRP situation, in consideration of a case where one TRP is a terrestrial network TN and the other TRP is the non-terrestrial network NTN, the above-described offset value t/n may be set differently. Specifically, i) and ii) below may be set/indicated differently.

i) t/n value for RAR window starting point related to RACH related to/corresponding to TRP/TAG/CORESET pool index which is TN

ii) t/n value related to TRP/TAG/CORESET pool index which is NTN

As an example, i) and ii) may be set to different values. As an example, i) and ii) may be set to values based on different ranges.

Or/and instead of utilizing the t/n value, an effect of Embodiment 2 may be obtained by increasing a value range of $k_{mac}$. Embodiment 2 may also be applied when both TRPs are the NTN.

As an additional embodiment, a separate RAR window starting offset may be utilized only with respect to RACH transmission related to a specific TAG/TRP/CORESET pool index.

As an example, a separate RAR window starting offset may be set/indicated with respect to RACH transmission related to a second TAG/TRP/CORESET pool index (i.e., CORESETpoolIndex = 1) within a specific serving cell.

As an example, a separately defined value may be applied as the RAR window starting offset with respect to the RACH transmission related to the second TAG/TRP/CORESET pool index (i.e., CORESETpoolIndex = 1) within the specific serving cell.

In this case, the UE may operate the RACH transmission related to the first TAG/TRP/CORESET pool index similarly to the existing scheme. That is, the RAR related to the RACH transmission related to the first TAG/TRP/CORESET pool index may be received based on the starting point of the RAR window configured to be cell-specific.

In the embodiments of Proposal 2, t msec and/or n slots may be set/indicated/defined as follows.

As an example, t msec and/or n slots may be set/indicated to the UE based on higher layer signaling such as RRC or/and MAC CE signaling.

As an example, t msec and/or n slots may be predefined with a specific value (between the UE and the base station or when implementing the UE and the base station).

According to Proposal 2, the following effects are derived.

Similar to Proposal 1, Proposal 2 may solve a problem in that the RAR related to the specific TRP/TAG/CORESET pool index is not properly received due to the delay.

The following points are distinguished from Proposal 1. Proposal 2 solves the above-described problem by delaying the starting point of the window rather than increasing the window.

In the above-described embodiments, "configuring" may mean the higher layer RRC/MAC signaling, and "indicating" may mean dynamic indication through the DCI.

The embodiments of Proposals 1/2 and additional embodiments may operate in specific combinations.

The embodiments of Proposal 1/2 above and the additional embodiments may be applied in order to solve the problem such as the backhaul delay which occurs when the cross-TRP (TRP-specific) RACH triggering mentioned in the background is performed. However, an application range of Proposal 1/2 is not limited to a case where the backhaul delay occurs. That is, it is apparent that an RACH procedure related to each TRP/TAG/CORESET pool index may be extensively applied to all cases where different delays occur.

As an example, the RACH procedure may be performed according to the existing scheme when the above-described problem is not premised. For example, it may be assumed that a specific TRP transmits a (CFRA-based RACH) PDCCH order to the UE to transmit the RACH to itself, and the TRP transmits the RAR after receiving the RACH. In this case, there is no problem related to the delay, so the embodiments of Proposal 1/2 and the additional embodiments may not be applied. That is, the TRP-specific RAR window/TRP-specific RAR window starting offset is not applied, or the UE may operate as previously defined (receive the RAR based on the cell specific RAR window).

As an example, even when the above-described problem is not premised, the embodiments of Proposal 1/Proposal. 2 may be applied. That is, the embodiments of Proposal 1/Proposal 2 described above may be applied by considering that the timing for each TRP may be different even if the backhaul delay/forwarding delay does not occur.

An example of the UE (or base station) operation based on at least one of the embodiments described above (e.g. at least one of Proposals 1 to 2 and the additional embodiment) is as follows.

1) The UE (base station) receives (transmits) configurations related to two TAGs (and/or two TAs) within a specific serving cell.

The configuration information may be based on contents of Proposals 1 and 2, and the additional embodiments. The configuration information may include information based on at least one of Proposal 1, Proposal 2, and the additional embodiments.

For example, the configuration information may include a RACH configuration related to each TAG/TRP/serving cell (additional PCI). The RAR window or/and RAR window starting offset may be configured based on each RACH configuration.

For example, the RAR window or/and RAR window starting offset related to each TAG may be configured based on the configuration information.

2) The UE (base station) receives (transmits) a message for configuring/indicating RACH transmission related to the two TAGs (or one of the two TAGs).

The message may be a PDCCH triggering/ordering a CFRA-based RACH.

3) The UE (base station) transmits (receives) the RACH based on the message.

The RACH transmission may be related to a specific TAG/TRP/serving cell (or additional PCI).

4) The UE (base station) receives (transmits) the RAR based on the above-described RAR window (e.g., a window configured based on a response window parameter of a first RACH configuration or a second RACH configuration).

The UE/base station operations are only examples, and each operation (or step) is not particularly required, and operations related to the RACH transmission related to two TAGs of the UE according to the above-described embodiments may be omitted or added depending on the UE/base station implementation scheme.

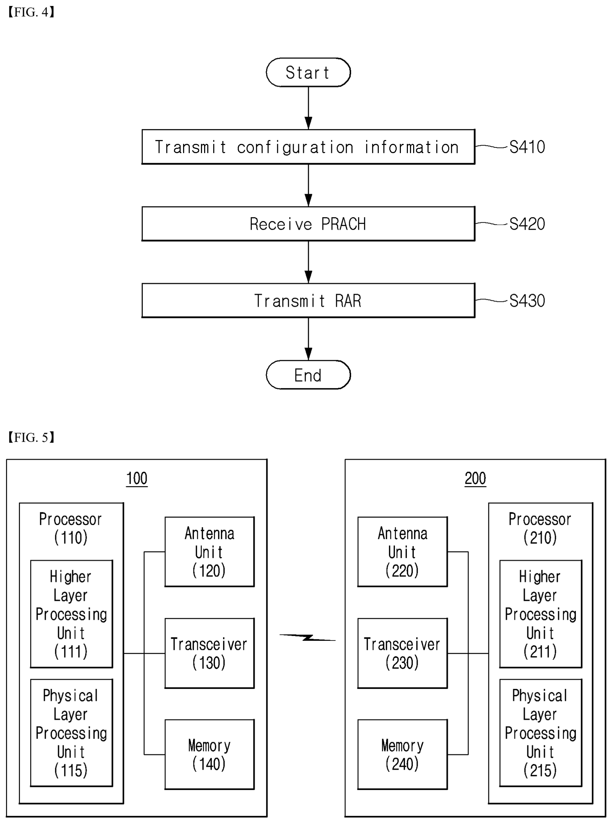

In terms of implementation, the operations (e.g., operations based on at least one of Proposals 1 and 2) of the base station/UE according to the above-described embodiments may be processed by devices (e.g., processors 110 and 210 in FIG. 5) in FIG. 5 to be described below.

Further, the operations (e.g., operations based on at least one of Proposals 1 and 2) of the base station/UE according to the above-described embodiment may be stored in memories (e.g., 140 and 240 in FIG. 5) in the form of an instruction/program (e.g., instruction or executable code) for driving at least one processor (e.g., 110 and 210 in FIG. 5).

Hereinafter, the above-described embodiments will be described in detail with reference to FIGS. 3 and 4 in terms of the operations of the UE and the base station. Methods to be described below are just distinguished for convenience of description and it is needless to say that some components of any one method may be substituted with some components of another method or may be applied in combination with each other.

FIG. 3 is a flowchart for describing a method performed by a user equipment (UE) according to an embodiment of the present disclosure.

Referring to FIG. 3, a method performed by the UE according to an embodiment of the present disclosure includes a configuration information receiving step S310, a PRACH transmitting step S320, and an RAR receiving step S330.

In S310, the UE receives configuration information from the base station.

The configuration information may include information based on Proposal 1 and/or Proposal 2 described above. As an example, the configuration information may be based on ServingCellConfigCommon based on Table 2.

According to an embodiment, the configuration information may include i) a first random access channel (RACH) configuration related to a physical cell identity (PCI) of a serving cell, and ii) a second random access channel (RACH) configuration related to an additional PCI.

According to an embodiment, the configuration information may further include information related to Nta offset (e.g., n-TimingAdvanceOffset and n-TimingAdvanceOffset2). Specifically, a first NTA,offset and a second NTA,offset may be configured based on the configuration information. The first NTA,offset may be related to a first TAG of two timing advance groups (TAGs), and the second NTA,offset may be related to a second TAG of the two TAGs.

The two TAGs may be configured in the serving cell. The first NTA,offset may be related to a physical cell identity (PCI) of the serving cell. The second NTA,offset may be related to the additional PCI. Each PCI may be identified by 'PhysCellId'.

That is, the PCI of the serving cell may be interpreted as/substituted with PhysCellId for the serving cell. Further, the additional PCI may be interpreted as/substituted with PhysCellId different from the PhysCellId for the serving cell. As an example, the first NTA,offset may be related to the PhysCellId for the serving cell. As an example, the second NTA,offset may be related to the PhysCellId different from the PhysCellId for the serving cell.

The uplink timing for each TAG may be determined based on each NTA,offset (see Table 1). Each uplink timing may be related to an uplink frame.

The first NTA,offset may be applied to uplink transmission based on a first Transmission Configuration Indication (TCI) state. The first TCI state may be related to first CORESETs based on a first CORESET pool index. As an example, the uplink transmission may be performed based on a spatial domain filter based on the first TCI state.

The second NTA,offset may be applied to uplink transmission based on uplink transmission based on a second TCI state. The second TCI state may be related to second CORESETs based on a second CORESET pool index. As an example, the uplink transmission may be performed based on a spatial domain filter based on the second TCI state.

In S320, based on the Random Access procedure being initiated, the UE transmits a Physical Random Access CHannel (PRACH) to the base station.

As an example, the PRACH may be related to the PCI of the serving cell or the additional PCI.

In S330, the UE receives the RAR from the base station based on a window related to a random access response (RAR).

The RAR may be related to one of two Timing Advance Groups (TAGs). Specifically, the RAR may include a Timing Advance Command applied to the first TAG or the second TAG.

$N_{TA}$ related to an amount of time alignment for the first TAG or the second TAG may be determined based on an index value $T_A$ indicated by the timing advance command. Specifically, a value of $N_{TA}$ may be indicated by the index value TA. As an example, $N_{TA}$ may be indicated based on the index value $T_A$ (e.g., 0, 1, 2, ..., 3846). The $N_{TA}$ may be expressed as $T_A \cdot 16 \cdot 64/2^\mu$ (see Table 5).

The PCI of the serving cell may be related to the first TAG of the two TAGs. The additional PCI may be related to the second TAG of the two TAGs.

According to an embodiment, the window may be based on the RAR window of Proposition 1 described above. Specifically, based on the PRACH being related to the PCI of the serving cell, a length of the window may be determined based on a response window parameter related to the first RACH configuration. Based on the PRACH being related to the additional PCI, the length of the window may be determined based on a response window parameter related to the second RACH configuration. The response window parameter may indicate a number of slots.

As described above, it may be assumed that a delay occurs in reception of the RAR related to a specific TAG (e.g., second TAG). Hereinafter, this will be specifically described.

Specifically, the RAR may be received based on a Physical Downlink Control Channel (PDCCH) and a Physical Downlink Shared Channel (PDSCH). The serving cell may be a Primary Cell (PCell) or a Secondary Cell (SCell). The PDCCH may be received based on a Type1-PDCCH Common Search Space (CSS) set configured in the primary cell.

A transport block may be received on the Physical Downlink Shared Channel (PDSCH) scheduled based on a DCI format 1_0 related to the PDCCH. The RAR may be based on the transport block.

As described above, the RAR related to the second TAG is also received from the primary cell, which may cause a delay in the reception of the RAR. In other words, a time required for reception of the RAR related to the second TAG may be different from a time required for reception of the RAR related to the first TAG.

The length of the window related to the RAR is determined based on the response window parameter of the first RACH configuration or the second RACH configuration depending on whether the PRACH is related to the PCI of the serving cell or the additional PCI. Thus, the RAR related to each TAG may be received normally.

The method may further include a PDCCH order receiving step. In the PDCCH order receiving step, the UE receives, from the base station, a Physical Downlink Control Channel (PDCCH) order. The random access procedure may be initiated by the PDCCH order. In this case, an RACH procedure related to the PCI or the additional PCI may be triggered by the PDCCH order.

The PRACH related to the PCI of the serving cell or the additional PCI may be transmitted based on the reception of the PDCCH order. That is, a PRACH for a PCI that is the same as or different from the PCI related to the reception of the PDCCH order may be triggered.

As an example, the PRACH related to the PCI of the serving cell or the additional PCI may be transmitted based on the reception of the PDCCH order related to the PC I of the serving cell.

As an example, the PRACH related to the additional PCI or the PCI of the serving cell may be transmitted based on the reception of the PDCCH order related to the additional PCI.

The PDCCH order may be based on Downlink Control Information (DCI). That is, the DCI including the information related to the PDCCH order may be referred to as a PDCCH order. For example, the DCI may include information that triggers the PRACH related to the PCI or the additional PCI.

The method may further include a step of receiving configuration information related to CORESETs. Specifically, the UE may receive configuration information related to COntrol REsource SETs (CORESETs) from the base station. i) First CORESETs related to a first CORESET pool index and ii) second CORESETs related to a second CORESET pool index are configured based on the configuration information related to the CORESETs. Different CORESET pool indices may be related to different physical cell IDs. CORESETs related to one CORESET pool index may be related to a physical cell ID of the serving cell, and CORESETs related to another CORESET pool Index may be related to another physical cell ID.

As an example, the first CORESET pool index may be related to the PCI of the serving cell. The second CORESET pool index may be related to the additional PCI. Further, as described above, the PCI of the serving cell is related to the first TAG, and the additional PCI is related to the second TAG. Thus, the first CORESET pool index may be related to the first TAG. The second CORESET pool index may be related to the second TAG.

The configuration information related to the CORESETs may be based on PDCCH-config including a controlResourceSetToAddModList of CORESETs.

Each TAG has an association indicated based on tag-Id-ptr. Specifically, the first TAG may have an association with a first TCI state related to the first CORESETs. The second TAG may have an association with a second TCI state related to the second CORESETs.

The method may further include a TAG related configuration information receiving step. In the step, the UE receives the TAG related configuration information from the base station. The TAG related configuration information (e.g., TAG-Config in Table 7) may include information for the first TAG and the second TAG.

The operations based on S310 to S330, the PDCCH order receiving step, the CORESETs related configuration information receiving step, and the TAG related configuration information receiving step described above may be implemented by the device in FIG. 5. For example, a UE 200 may control one or more transceivers 230 and/or one or more memories 240 to perform the operations based on S310 to S330, the PDCCH order receiving step, the CORESETs related configuration information receiving step, and the TAG related configuration information receiving step.

Hereinafter, the embodiments described above will be specifically described in terms of the operation of the base station.

Steps S410 to S430, a PDCCH order transmitting step, a CORESETs related configuration information transmitting step, and a TAG related configuration information transmitting step to be described below correspond to S310 to S330, the PDCCH order receiving step, the CORESETs related configuration information receiving step, and the TAG related configuration information receiving step described in FIG. 3. By considering the correspondence relationship, redundant descriptions are omitted. That is, a specific description of the base station operation described below may be replaced with the description/embodiment of FIG. 3 corresponding to the corresponding operation.

As an example, the descriptions/embodiments of S310 to S330 of FIG. 3 may be additionally applied to the base station operations of S410 and S430 described below.

The descriptions/embodiments for the PDCCH order receiving step, the CORESETs related configuration information receiving step, and the TAG related configuration information receiving step may be additionally applied to base station operations of the PDCCH order transmitting step, the CORESETs related configuration information transmitting step, and the TAG related configuration information transmitting step described below.

FIG. 4 is a flowchart for describing a method performed by a base station according to another embodiment of the present disclosure.

Referring to FIG. 4, the method performed by the base station according to another embodiment of the present disclosure includes a configuration information transmitting step S410, a PRACH receiving step S420, and an RAR transmitting step S430.

In S410, the base station transmits configuration information to the UE.

In S420, based on a Random Access procedure being initiated, the base station receives a Physical Random Access CHannel (PRACH) from the UE.

In S430, the base station transmits, a window related to a Random Access Response (RAR), the RAR to the UE.

The method may further include a PDCCH order transmitting step. In the PDCCH order transmitting step, the base station transmits, to the UE, a Physical Downlink Control Channel (PDCCH) order. The random access procedure may be initiated by the PDCCH order. In this case, an RACH procedure related to the PCI or the additional PCI may be triggered by the PDCCH order.

The method may further include a step of transmitting configuration information related to CORESETs. Specifically, the base station may transmit configuration information related to COntrol REsource SETs (CORESETs) to the UE.

The method may further include a TAG related configuration information transmitting step. In the step, the base station transmits the TAG related configuration information to the UE.

The operations based on S410 to S430, the PDCCH order transmitting step, the CORESETs related configuration information transmitting step, and the TAG related configuration information transmitting step described above may be implemented by the device in FIG. 5. For example, a UE 100 may control one or more transceivers 130 and/or one or more memories 140 to perform the operations based on S410 to S430, the PDCCH order transmitting step, the CORESETs related configuration information transmitting step, and the TAG related configuration information transmitting step.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in wireless communication, the method comprising:

   receiving configuration information,
   wherein the configuration information includes i) a first Random Access CHannel (RACH) configuration related to a Physical Cell Identity (PCI) of a serving cell, and ii) a second RACH configuration related to an additional PCI;
   based on a Random Access procedure being initiated, transmitting a Physical Random Access CHannel (PRACH); and
   based on a window related to a Random Access Response (RAR), receiving the RAR,
   wherein the RAR is related to one of two Timing Advance Groups (TAGs),
   wherein the PCI of the serving cell is related to a first TAG of the two TAGs, and the additional PCI is related to a second TAG of the two TAGs,
   wherein, based on the PRACH being related to the PCI of the serving cell, a length of the window is determined based on a response window parameter related to the first RACH configuration,
   wherein, based on the PRACH being related to the additional PCI, a length of the window is determined based on a response window parameter related to the second RACH configuration.

2. The method of claim 1, wherein the RAR is received based on a Physical Downlink Control Channel (PDCCH) and a Physical Downlink Shared Channel (PDSCH).

3. The method of claim 2, wherein the serving cell is a primary cell or a secondary cell, and
   wherein the PDCCH is received based on a Typel-PDCCH Common Search Space (CSS) set configured in the primary cell.

4. The method of claim 3, wherein a transport block is received in the Physical Downlink Shared Channel (PDSCH) scheduled based on a DCI format 1_0 related to the PDCCH; and
   wherein the RAR is based on the transport block.

5. The method of claim 1, further comprising:

   receiving a Physical Downlink Control Channel (PDCCH) order,
   wherein the random access procedure is initiated by the PDCCH order.

6. The method of claim 5, wherein the PRACH related to the PCI or the additional PCI of the serving cell is transmitted based on the reception of the PDCCH order.

7. The method of claim 5, wherein the PDCCH order is based on Downlink Control Information (DCI).

8. The method of claim 1, wherein the response window parameter represents a number of slots.

9. The method of claim 1, wherein the RAR includes a Timing Advance Command applied to the first TAG or the second TAG.

10. The method of claim 1, wherein a first $N_{TA,offset}$ and a second $N_{TA,offset}$ are configured based on the configuration information, and

   wherein the first $N_{TA,offset}$ is related to the first TAG and the second $N_{TA,offset}$ is related to the second TAG.

11. The method of claim 1, further comprising:

   receiving configuration information related to COntrol REsource SETs (CORESETs),
   wherein i) first CORESETs related to a first CORESET pool index and ii) second CORESETs related to a second CORESET pool index are configured based on the configuration information related to the CORESETs,
   wherein the first CORESET pool index is related to the first TAG, and
   wherein the second CORESET pool index is related to the second TAG.

12. A user equipment operating in a wireless communication system, the user equipment comprising:

   one or more transceivers;
   one or more processors; and
   one or more memories connected to the one or more processors and storing instructions,
   wherein the instructions configure the one or more processors to perform all steps of a method according to any one of claims 1 to 11 based on being executed by the one or more processors.

13. A device comprising:

   one or more memories; and
   one or more processors operably connected to the one or more memories,
   wherein the one or more memories store instructions that configure the one or more processors to perform all steps of a method according to any one of claims 1 to 11 based on being executed by the one or more processors.

14. One or more non-transitory computer readable mediums storing instructions,
   wherein the instructions executable by one or more processors configure the one or more processors to perform all steps of a method according to any one of claims 1 to 11.

15. A method performed by a base station in wireless communication, the method comprising:

   transmitting configuration information,
   wherein the configuration information includes i) a first Random Access CHannel (RACH) configuration related to a Physical Cell Identity (PCI) of a serving cell, and ii) a second RACH configuration related to an additional PCI;
   based on a Random Access procedure being initiated, receiving a Physical Random Access CHannel (PRACH); and
   based on a window related to a Random Access Response (RAR), transmitting the RAR,
   wherein the RAR is related to one of two Timing Advance Groups (TAGs),
   wherein the PCI of the serving cell is related to a first TAG of the two TAGs, and the additional PCI is related to a second TAG of the two TAGs,
   wherein, based on the PRACH being related to the PCI of the serving cell, a length of the window is determined based on a response window parameter related to the first RACH configuration,
   wherein, based on the PRACH being related to the additional PCI, a length of the window is determined based on a response window parameter related to the second RACH configuration.

16. A base station operating in a wireless communication system, the base station comprising:

   one or more transceivers;
   one or more processors; and
   one or more memories connected to the one or more processors and storing instructions,
   wherein the instructions configure the one or more processors to perform all steps of a method according to claim 15 based on being executed by the one or more processors.

【FIG. 1】

| | |
|---|---|
| R \| Timing Advance Command | Oct 1 |
| Timing Advance Command \| UL Grant | Oct 2 |
| UL Grant | Oct 3 |
| UL Grant | Oct 4 |
| UL Grant | Oct 5 |
| Temporary C-RNTI | Oct 6 |
| Temporary C-RNTI | Oct 7 |

【FIG. 2】

| | |
|---|---|
| TAG ID \| Timing Advance Command | Oct 1 |

【FIG. 3】

Start

Receive configuration information —— S310

Transmit PRACH —— S320

Receive RAR —— S330

End

【FIG. 4】

```
                    ( Start )
                        |
                        v
    +-------------------------------------+
    | Transmit configuration information  |——S410
    +-------------------------------------+
                        |
                        v
    +-------------------------------------+
    |           Receive PRACH             |——S420
    +-------------------------------------+
                        |
                        v
    +-------------------------------------+
    |           Transmit RAR              |——S430
    +-------------------------------------+
                        |
                        v
                    ( End )
```

【FIG. 5】

## INTERNATIONAL SEARCH REPORT

| International application No. |
|---|
| **PCT/KR2024/000914** |

**A. CLASSIFICATION OF SUBJECT MATTER**

**H04W 74/08**(2009.01)i; **H04W 74/00**(2009.01)i; **H04W 72/231**(2023.01)i; **H04W 72/232**(2023.01)i; **H04W 56/00**(2009.01)i

According to International Patent Classification (IPC) or to both national classification and IPC

**B. FIELDS SEARCHED**

Minimum documentation searched (classification system followed by classification symbols)

H04W 74/08(2009.01); H04B 7/26(2006.01); H04W 36/38(2009.01); H04W 56/00(2009.01); H04W 72/04(2009.01); H04W 74/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 물리 셀 아이덴티티(Physical Cell Identity, PCI), 랜덤 액세스 채널(Random Access CHannel, RACH) 설정(configuration), 랜덤 액세스 절차(Random Access procedure), 물리 랜덤 액세스 채널 (Physical Random Access CHannel, PRACH), 랜덤 액세스 응답(Random Access Response, RAR), 윈도우 (window), 타이밍 어드밴스 그룹(Timing Advance Group, TAG)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0060385 A (SAMSUNG ELECTRONICS CO., LTD.) 26 May 2021 (2021-05-26) See paragraphs [0055]-[0059], [0064] and [0074]; claim 5; and figures 8 and 10. | 1-16 |
| Y | US 2022-0377801 A1 (QUALCOMM INCORPORATED) 24 November 2022 (2022-11-24) See claims 55 and 79-80. | 1-16 |
| A | KR 10-1783278 B1 (HUAWEI TECHNOLOGIES CO., LTD.) 29 September 2017 (2017-09-29) See paragraphs [0327]-[0329]; and figure 7. | 1-16 |
| A | KR 10-2014-0042914 A (INTEL CORPORATION) 07 April 2014 (2014-04-07) See paragraphs [0060]-[0068]; and figure 8. | 1-16 |
| A | KR 10-2013-0139354 A (ALCATEL LUCENT) 20 December 2013 (2013-12-20) See paragraphs [0016]-[0039]; and figure 2. | 1-16 |

| ☐ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2024** | **26 April 2024** |

| Name and mailing address of the ISA/KR | Authorized officer |
|---|---|
| **Korean Intellectual Property Office** **Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000914**

| Patent document cited in search report | | | Publication date (day/month/year) | Patent family member(s) | | | Publication date (day/month/year) |
|---|---|---|---|---|---|---|---|
| KR | 10-2021-0060385 | A | 26 May 2021 | CN | 103597757 | A | 19 February 2014 |
| | | | | CN | 103597757 | B | 02 November 2016 |
| | | | | CN | 107017970 | A | 04 August 2017 |
| | | | | CN | 107017970 | B | 14 July 2020 |
| | | | | EP | 2696517 | A2 | 12 February 2014 |
| | | | | EP | 2696517 | A4 | 05 November 2014 |
| | | | | EP | 2696517 | B1 | 16 October 2019 |
| | | | | EP | 2709292 | A2 | 19 March 2014 |
| | | | | EP | 2709292 | A4 | 01 April 2015 |
| | | | | EP | 2709292 | B1 | 29 September 2021 |
| | | | | EP | 2709388 | A2 | 19 March 2014 |
| | | | | EP | 2709388 | A4 | 22 April 2015 |
| | | | | EP | 2709388 | B1 | 10 January 2018 |
| | | | | EP | 3598688 | A1 | 22 January 2020 |
| | | | | EP | 3598688 | B1 | 08 September 2021 |
| | | | | EP | 3965317 | A1 | 09 March 2022 |
| | | | | KR | 10-1898109 | B1 | 13 September 2018 |
| | | | | KR | 10-2012-0113688 | A | 15 October 2012 |
| | | | | KR | 10-2012-0126030 | A | 20 November 2012 |
| | | | | KR | 10-2012-0126032 | A | 20 November 2012 |
| | | | | KR | 10-2019-0077270 | A | 03 July 2019 |
| | | | | KR | 10-2066425 | B1 | 15 January 2020 |
| | | | | KR | 10-2383391 | B1 | 08 April 2022 |
| | | | | US | 10645691 | B2 | 05 May 2020 |
| | | | | US | 11284391 | B2 | 22 March 2022 |
| | | | | US | 2014-0023055 | A1 | 23 January 2014 |
| | | | | US | 2014-0092812 | A1 | 03 April 2014 |
| | | | | US | 2016-0021628 | A1 | 21 January 2016 |
| | | | | US | 2016-0021629 | A1 | 21 January 2016 |
| | | | | US | 2016-0021630 | A1 | 21 January 2016 |
| | | | | US | 2018-0302902 | A1 | 18 October 2018 |
| | | | | US | 2020-0260445 | A1 | 13 August 2020 |
| | | | | US | 9674805 | B2 | 06 June 2017 |
| | | | | US | 9674806 | B2 | 06 June 2017 |
| | | | | US | 9681405 | B2 | 13 June 2017 |
| | | | | US | 9681406 | B2 | 13 June 2017 |
| | | | | US | 9999044 | B2 | 12 June 2018 |
| | | | | WO | 2012-138157 | A2 | 11 October 2012 |
| | | | | WO | 2012-138157 | A3 | 10 January 2013 |
| | | | | WO | 2012-153993 | A2 | 15 November 2012 |
| | | | | WO | 2012-153993 | A3 | 21 March 2013 |
| US | 2022-0377801 | A1 | 24 November 2022 | BR | 112022005316 | A2 | 14 June 2022 |
| | | | | CN | 114451057 | A | 06 May 2022 |
| | | | | EP | 4039040 | A1 | 10 August 2022 |
| | | | | EP | 4039040 | A4 | 03 May 2023 |
| | | | | KR | 10-2022-0083683 | A | 20 June 2022 |
| | | | | TW | 202121925 | A | 01 June 2021 |
| | | | | WO | 2021-062864 | A1 | 08 April 2021 |
| KR | 10-1783278 | B1 | 29 September 2017 | BR | 112016001517 | A2 | 25 July 2017 |
| | | | | BR | 112016001517 | B1 | 18 October 2022 |

Form PCT/ISA/210 (patent family annex) (July 2022)

## INTERNATIONAL SEARCH REPORT
### Information on patent family members

International application No.

**PCT/KR2024/000914**

| Patent document cited in search report | | | Publication date (day/month/year) | Patent family member(s) | | | Publication date (day/month/year) |
|---|---|---|---|---|---|---|---|
| | | | | CN | 105264997 | A | 20 January 2016 |
| | | | | CN | 105264997 | B | 22 October 2019 |
| | | | | EP | 3016467 | A1 | 04 May 2016 |
| | | | | EP | 3016467 | A4 | 01 June 2016 |
| | | | | EP | 3016467 | B1 | 03 April 2019 |
| | | | | JP | 2016-525837 | A | 25 August 2016 |
| | | | | JP | 6216052 | B2 | 18 October 2017 |
| | | | | KR | 10-2017-0110176 | A | 10 October 2017 |
| | | | | US | 10791575 | B2 | 29 September 2020 |
| | | | | US | 2016-0212769 | A1 | 21 July 2016 |
| | | | | US | 2018-0160454 | A1 | 07 June 2018 |
| | | | | US | 9900912 | B2 | 20 February 2018 |
| | | | | WO | 2015-010332 | A1 | 29 January 2015 |
| KR | 10-2014-0042914 | A | 07 April 2014 | BR | 112014002694 | A2 | 13 June 2017 |
| | | | | BR | 112014002694 | B1 | 15 February 2022 |
| | | | | BR | 14002694 | A2 | 13 June 2017 |
| | | | | CN | 103765793 | A | 30 April 2014 |
| | | | | CN | 103765793 | B | 02 March 2018 |
| | | | | CN | 103765802 | A | 30 April 2014 |
| | | | | CN | 103765802 | B | 22 March 2017 |
| | | | | CN | 103765968 | A | 30 April 2014 |
| | | | | CN | 103765968 | B | 28 August 2018 |
| | | | | CN | 103891159 | A | 25 June 2014 |
| | | | | CN | 103891159 | B | 16 November 2016 |
| | | | | CN | 108736920 | A | 02 November 2018 |
| | | | | CN | 108736920 | B | 25 February 2022 |
| | | | | EP | 2742619 | A1 | 18 June 2014 |
| | | | | EP | 2742619 | A4 | 05 August 2015 |
| | | | | EP | 2742748 | A1 | 18 June 2014 |
| | | | | EP | 2742748 | A4 | 26 August 2015 |
| | | | | EP | 2742755 | A1 | 18 June 2014 |
| | | | | EP | 2742755 | A4 | 14 October 2015 |
| | | | | HK | 1256892 | A1 | 04 October 2019 |
| | | | | JP | 2014-522198 | A | 28 August 2014 |
| | | | | KR | 10-1546203 | B1 | 20 August 2015 |
| | | | | RU | 107942 | A | 20 September 2015 |
| | | | | RU | 154105 | A | 10 July 2013 |
| | | | | RU | 2011154105 | A | 10 July 2013 |
| | | | | RU | 2014107942 | A | 20 September 2015 |
| | | | | US | 10009864 | B2 | 26 June 2018 |
| | | | | US | 2013-0265972 | A1 | 10 October 2013 |
| | | | | US | 2013-0294390 | A1 | 07 November 2013 |
| | | | | US | 2014-0003270 | A1 | 02 January 2014 |
| | | | | US | 2014-0177427 | A1 | 26 June 2014 |
| | | | | US | 2014-0185523 | A1 | 03 July 2014 |
| | | | | US | 2014-0219185 | A1 | 07 August 2014 |
| | | | | US | 2016-0227504 | A1 | 04 August 2016 |
| | | | | US | 2017-0273045 | A1 | 21 September 2017 |
| | | | | US | 9271249 | B2 | 23 February 2016 |
| | | | | US | 9363780 | B2 | 07 June 2016 |

Form PCT/ISA/210 (patent family annex) (July 2022)

| Patent document cited in search report | | | Publication date (day/month/year) | Patent family member(s) | | | Publication date (day/month/year) |
|---|---|---|---|---|---|---|---|
| | | | | US | 9578616 | B2 | 21 February 2017 |
| | | | | US | 9807723 | B2 | 31 October 2017 |
| | | | | US | 9820250 | B2 | 14 November 2017 |
| | | | | US | 9999018 | B2 | 12 June 2018 |
| | | | | WO | 2013-025236 | A1 | 21 February 2013 |
| | | | | WO | 2013-025237 | A1 | 21 February 2013 |
| | | | | WO | 2013-025258 | A1 | 21 February 2013 |
| | | | | WO | 2013-025279 | A1 | 21 February 2013 |
| | | | | WO | 2013-025379 | A1 | 21 February 2013 |
| | | | | WO | 2013-025419 | A1 | 21 February 2013 |
| KR | 10-2013-0139354 | A | 20 December 2013 | CN | 102740445 | A | 17 October 2012 |
| | | | | CN | 102740445 | B | 08 April 2015 |
| | | | | EP | 2695429 | A1 | 12 February 2014 |
| | | | | EP | 2695429 | A4 | 29 April 2015 |
| | | | | EP | 2695429 | B1 | 01 May 2019 |
| | | | | JP | 2014-513465 | A | 29 May 2014 |
| | | | | JP | 5848437 | B2 | 27 January 2016 |
| | | | | KR | 10-1586638 | B1 | 19 January 2016 |
| | | | | US | 2014-0023043 | A1 | 23 January 2014 |
| | | | | WO | 2012-137034 | A1 | 11 October 2012 |

Form PCT/ISA/210 (patent family annex) (July 2022)